# EUROPÄISCHE PATENTSCHRIFT

(11) **EP 2 115 356 B1**
(45) Veröffentlichungstag und Bekanntmachung des Hinweises auf die Patenterteilung: **03.07.2013**
(21) Anmeldenummer: 08707144.5
(22) Anmeldetag: 21.01.2008
(51) Int. Cl.: F26B 5/04, C10L 5/44, B01F 7/08, B01F 15/00, F26B 11/16, F26B 25/00, C10L 5/46, F26B 1/00, F23G 5/04, B01F 13/06

(54) **ANLAGE ZUM TROCKNEN VON ORGANISCHEN MASSEN**
INSTALLATION FOR DRYING ORGANIC MATTER
INSTALLATION DE SÉCHAGE DE MASSES ORGANIQUES

(30) Priorität: 25.01.2007 DE 202007001123 U
(43) Veröffentlichungstag der Anmeldung: 11.11.2009
(73) Patentinhaber: Inotec GmbH & Co. Holding und Handels KG, 72770 Reutlingen (DE)
(72) Erfinder: KRÜGER, Günter, 99310 Dornheim (DE)
(74) Vertreter: Weiss, Peter
(86) Internationale Anmeldenummer: PCT/EP2008/000411
(87) Internationale Veröffentlichungsnummer: WO 2008/089931

(56) Entgegenhaltungen:
- WO-A-00/52405
- DE-A1- 19 507 181
- US-A- 4 882 851
- US-A- 5 229 010

## Beschreibung

Die Erfindung betrifft eine Anlage zum Trocken von organischen Massen, insbesondere Küchen- und Speiseabfälle oder andere Biomassen, auch solche, die Verpackungsreste, Servietten, Strohhalme oder dgl. enthalten, nach dem Oberbegriff von Anspruch 1.

Es ist bekannt, zum Trocknen von Biomassen, z. B. bei der Abwasserklärung anfallende Klärschlämme, Gülle und sonstige mikrobiologische und nachwachsende Biomassen, insbesondere nach der Vergärung, nach dem Auspressen in Öfen zu trocknen und die festen Restbestandteile in Heizkraftwerken zu verbrennen. Es ist ferner aus der DE 28 33 731 A1 bekannt, Biomassen aus der Gruppe fester Stadtmüll, landwirtschaftliche Abfälle, Lebensmittelabfälle, Papierabfälle, zerkleinertes Holz, Holzabfälle oder andere zellulosereichen Materialen mit Bindemitteln aus der Gruppe Wasser, Klärschlamm, Ablaugen, Teerölkondensat, Restmelasse oder andere stärkehaltige Abfallmaterialien miteinander zu vermischen und zu Briketts zu verpressen.

Aus der DE 692 22 135 T2 ist ein Verfahren zur Herstellung eines Brennstoffes durch Trocknung eines auf einen Trockenmassegehalt von mindestens 15 % bis 30 % entwässerten Schlammes bekannt. Der entwässerte Schlamm wird vor dem Trocknen mit einem brennbaren Material, das einen geringeren Wassergehalt als der Schlamm aufweist, zu einem Verbundprodukt vermischt. Unter Verwendung einer Trocknungsanlage zum Erhitzen wird das Gemisch zu einer gewünschten, brennbaren Trockenmasse getrocknet. Die Troaknungsanlage ist eine Trommelanlage mit einer Heizvorrichtung an einem Ende. Das Verbundprodukt wird unmittelbar der Heizvorrichtung zugeführt und größtenteils mechanisch und pneumatisch zu einem Brennstoff geformt. Der Brennstoff kann z.B. in Form von Pellets gehandelt werden.

Ein Vakuummischer für zahntechnische Anwendungen und dgl. ist aus der DE-AS 1 607 783 bekannt, um Gieß- und/oder Knetmassen miteinander zu vermischen. Darüber hinaus sind Vorrichtung zum Mischen und Kneten von organischen oder anorganischen Massen oder Teig in den verschiedensten Ausführungen bekannt. Diese können gemäß US-PS 3,194,504; äußere Mischflügel und innenliegende Mischerscheiben aufweisen. Aus der US-PS 1,825,261 ist eine Kaffeebohnenmischmaschine bekannt, bei der in einem geschlossenen Zylindergehäuse wendeiförmige Mischflügel durchgehend vorgesehen sind, um die Kaffeebohnen miteinander zu mischen.

Die bekannten. Anlagen zur Trocknung von organischen Massen sind Großanlagen. Sie sind nicht geeignet, Küchenabfälle, Speisereste und andere im Gastronomie, Kantinenbereich und in der Lebensmittelverwertung anfallenden Abfälle hygienisch derart aufzuarbeiten, dass diese als getrocknetes Produkt - ohne Freisetzung von Gerüchen - verbrannt oder der Abfallverwertung zugeführt werden können. Bisher wurden die Abfälle über Tage oder Wochen in Behältern als übelriechende Masse gesammelt und dann über den Hausmüll oder nach aufwändiger Sterilisierung entsorgt.

Aus der DE 195 07 181 A1 ist eine Vorrichtung zum Mischen oder Kneten von organischen oder anorganischen Massen oder Teig mit einem länglichen Gehäuse mit im wesentlichen horizontaler Längsachse bekannt. Um diese Längsachse sind äussere und innere Mischflügel gelagert und antreibbar. Die Mischflügel sind dabei so ausgebildet und angetrieben, dass der äussere Mischflügel das Mischgut in die eine Längsrichtung und der innere Mischflügeln das Mischgut in die entgegengesetzte Richtung fördert oder umgekehrt oder eine gleichsinnige Förderung erfolgt.

Aus der WO 00/52405 A ist eine Anlage zum hygienischen Behandelt und Trocknen von organischem Abfall bekannt. Dieser Abfall wird mittels Rührelementen in einem Vertikalreaktor gehandelt, wobei er in dem Vertikalreaktor durch von aussen eingebrachte Mikrowellenenergie erwärmt wird. Ferner kann dieser Reaktor evakuiert werden.

Der Erfindung liegt die Ausgabe zugrunde, eine Anlage anzugeben, um organische Massen, insbesondere Biomassen wie sie als Küchen- und Speiseabfälle, verunreinigt oder nicht verunreinigt mit Servietten, Trinkhalmen, Verpackungsresten, nahezu, geruchsfrei zu einer Trockenmasse aufbereiten zu können, die dem Hausmüll oder der Verbrennung in einer Heizanlage oder anderen Verwertungen zugeführt oder bedenkenlos entsorgt werden kann.

Die Aufgabe löst die Erfindung durch Ausgestaltung einer Anlage gemäß der Lehre des kennzeichnenden Teils von: Anspruch 1.

Diese Anlage lässt sich als kompakte Einheit realisieren und zwar in verschiedenen Baugrößen. So kann der Mischer ein 20-, 50-, 100-, 150-, 200-, 500- oder 1000-Liter-Mischer und größer sein, der gemeinsam mit den weiteren Komponenten auf einer Plattform montiert oder zu einer baulichen Einheit zusammengestellt werden kann. Eine solche kompakte Anlage kann beispielsweise in den Abfallräumen eines Restaurants oder einer Kantine installiert werden. Aber auch größeres Mischer oder Mischer mit anderen Volumina können zur Anwendung kommen. Die Auslegung und Dimensionierung sind vom jeweiligen Einsatz abhängig. An Stelle eines Kühlaggregates, das beispielsweise elektrisch angetrieben wird, kann auch kühleres leitungswasser oder anderes kühles Brauchwasser, im Kondensator für den Kondensationsprozess des aus dem Mischer mit der Vakuumpumpe abgesogenen, dampfförmigen Luftgemisches verwendet werden. Die Wirkungsweise wird jedoch erhöht, wenn ein elektrisch angetriebenes Kühlaggregat verwendet wird, um in den Kondensator um das Kondensationsrohr gekühlte Kühlflüssigkeit fließen lassen zu können. In der Anlage kann jede bekannte Vakuumpumpe eingesetzt werden, um die Abluft von den organischen Massen, einschließlich eventueller Faulgase, anzusaugen. Diese feuchtigkeitshaltige Luft bzw. der Wasserdampf wird dann in dem Kondensator kondensiert und das Kondensat als Abwasser in die Kanalisation eingeleitet.

Um den Trocknungsprozess und den Verdunstungsprozess zu beschleunigen, ist vorgesehen, dass die Boden- und/oder Seiten- und Stirnwände des Gehauses des Mischers und/oder mindestens ein Mischflügel im Mischer über geeignete Heizvorrichtungen die eingebrachte organische Masse erwärmen. Hierfür können elektrische Heizelemente vorgesehen sein, die in entsprechende Kanäle der Bauteile eingesetzt sind. Es ist aber auch eine Beheizung mittels einer Heizwasserleitung, beispielsweise von einer in dem Gebäude vorhandenen Heizleitung eingespeistes Heißwässer, möglich. In diesem Fall müssen in bekannter Weise wässerführende Kanäle in den Baüteilen vorgesehen oder diese hohl ausgebildet sowie Zuleitungen und Verteiler und Ableitungen mit Sammlern vorgesehen sein, um den Heizungswasserkreislauf zu schließen. Dies ist auch bei der Verwendung von Mischerflügeln möglich, da diese hohl sind oder Leitungskanäle aufweisen, wobei die Einspeisung über die eine Hohlwelle erfolgt, ebenso die Ableitung. Zweckmäßigerweise ist der Mischerflügel dann beidseitig an den Stirnwänden des Mischers über Verteiler gelagert.

Anstelle oder ergänzend zu der beschriebenen Heizvorrichtung kann auch eine Mikrowellenheizvorrichtung zur Anwendung kommen. Es hat sich gezeigt, dass bei Einbringen eines Mikrowellehgenerators z. B. in die Haube und beim Generieren von Mikrowellen im Bereich von 2,5 GHz eine effiziente innere Erwärmung des Mischgutes in dem Mischer ebenfalls erzielbar ist, auch dann, wenn die Mischflügel aus Metall bestehen. Versuche mittels Infrarotlichtheizeinrichtungen haben ferner gezeigt, dass eine schnelle intensive Erwärmung des Mischgutes auch hierüber erzielbar ist. Die beste Effizienz ist erzielt worden mit Infrarotlicht im Wellenbereich von 2 bis .6 µm. Die Leistung des Mikrowellengenerators oder die der Infraroterwärmuhgsquelle sollte dabei der Größe des Mischers entsprechend angepasst werden. Durch die geschlossene Ausführung des Mischers mit der Haube aus Metall ist bei der Verwendung von strahlenden Wärmequellen zugleich eine sichere Abschirmung nach außen gegeben.

Versuche haben gezeigt, dass in der Anlage sich als besonders effizient Mischer erwiesen haben, die in den Patentschriften DE 195 07 181 C2 und DE 43 41 569 C2 beschrieben sind. Die Lehren finden auch auf den Mischer für die erfindungsgemäße Anlage Anwendung. Diese Mischer gewährleisten auch bei langsamer Drehung der Mischflügel ein optimales Verdunsten des Feuchtigkeitsanteils der organischen Masse. In größeren Anlagen können darüber hinaus die Mischflügel direkt beheizt werden, wie vorher schon beschrieben. Auch ist es mit diesen Mischern möglich, den Trocknungsprozess jederzeit zu unterbrechen, um weitere organische Massen einzufüllen, ohne vorher den Prozessablauf beenden zu müssen. Dies hat den Vorteil, dass beispielsweise während der Tagesstunden und am Abend eines Tages Essenreste, Küchenabfälle und dgl. nach Unterbrechung des Vakuumprozesses in den Mischer hineingeschüttet werden können und die abschließende Trocknung in den Nachtstunden erfolgt. Am Morgen kann der Mischer dann über die Entleerungsöffnung entleert werden, wobei die organischen, getrockneten Massen durch den fortlaufenden Mischprozess zum einen zerkleinert und zum anderen durch das permanente Entziehen der gas- und feuchtigkeitshaltigen Luft getrocknet sind. Dieser Prozess erfolgt praktisch geruchlos, wobei das Kondensat direkt in den Kanalabfluss geleitet werden kann. Die Entleerung kann dabei in einen Aufnahmebehälter (fahrbar oder stationär), in einen Behälter einer Förderanlage oder einen Behälter einer Abfüllanlage erfolgen, mit der die trockene Masse in Säcke abgefüllt werden kann, die nachträglich beispielsweise auch vakuumiert und dann verschlossen werden können. Das Kondensat kann darüber hinaus auch in einen Kondensatsammelbehälter abfließen, der über eine gesteuerte Ventileinrichtung z. B. an das Kanalnetz wahlweise anschaltbar ist. Dies hat den Vorteil, dass eine Abgabe des Abwassers pulsweise erfolgt und die Zuleitungen zum Kanal nicht ständig geöffnet sind. Geruchsbelästigungen vom Kanal her werden dadurch ausgeschlossen. Durch die Möglichkeit der permanenten Beschickung und des Prozessablaufes innerhalb eines Tages können Fäulnisbakterien sich auch nicht vermehren und zur speziellen Geruchsbelästigung beitragen.

Vorteilhafte Ausgestaltungsformen des Mischers und der Anlage sind in den Unteransprüchen im Detail angegeben. Hierauf wird verwiesen.

Eine besondere Ausgestaltung des Mischers ist dann gegeben, wenn zwei Antriebe für zwei zentrisch gelagerte Flügelanordnungen bzw. eine zentrische Schlagmesseranordnung vorgesehen sind, die im Falle des Mischens eine gegenläufige Transportrichtung des Mischgutes bewirken, so dass die äußeren Mischflügel das Mischgut stets zum einen Ende des Mischtroges bewegen, während die inneren Mischflügel bzw. das Schlagmesser das Mischgut innerhalb der äußeren Mischflügel entgegengesetzt bewegen, so dass bei gleichzeitiger Drehung eine in sich kreisende Bewegung des Mischgutes von einer Seite zur anderen Seite im Mischtrog bewirkt wird. Dadurch sind eine optimale Mischung und Freisetzung von Wasserdampf auch während einer kurzer Mischdauer gewährleistet. Die Verwendung eines Schlagmessers zum Erzielen dieses Soges nach der einen Seite bewirkt zugleich, dass das Mischgut zusätzlich zerkleinert wird. Die propellerartigen Messerstellungen bewirken dabei ebenso wie die Verwendung von schneckenförmigen Flügeln als zentrische Flügelanordnung - einen Sog und einen Druck zur Stirnseite hin. Der Druck wird jedoch von den außen liegenden Schneckenabstreifern aufgehoben, wobei diese das Material in die entgegengesetzte Richtung fördern. Es entsteht also ein Mischeffekt.

Der Mischeffekt durch eine Mischflügelanordnung gemäß der Erfindung ist auch dann gegeben, wenn sowohl der innere Mischflügel bzw. das Schlagmesser als auch der äußere Mischflügel sich in eine Richtung wirkend drehen. Die Mischintensität kann jedoch wesentlich erhöht und die Mischzeit wesentlich verringert werden, wenn sich die inneren und äußeren Mischflügel gegensinnig drehen, so dass der beschriebene umlaufende Strömungseffekt erzielt wird und zugleich aufgeworfene Teile in diesen Strom mit einbezogen werden. Darüber hinaus hat sich gezeigt, dass eine beschleunigte Mischwirkung erzielt wird, wenn die Mischflügel im Intervall geschaltet werden, wobei zweckmäßigerweise die Intervallschaltungen des inneren und äußeren Flügels zeitversetzt erfolgen. Darüber hinaus empfiehlt es sich, zugleich mit der Intervallschaltung auch die Drehrichtung der angetriebenen äußeren oder inneren Mischflügel zu ändern, wobei auch diese Änderung individuell gesteuert werden kann, so dass Überschneidungen der Mischgutförderungen durch die äußeren Mischflügel und inneren Mischflügel einerseits und die gegenläufige Drehrichtung andererseits ebenfalls gegeben sein können. Eine gleiche Drehrichtung, also eine gleiche Förderrichtung, beschleunigt die Mischwirkung ebenfalls. Es hat sich weiterhin als vorteilhaft erwiesen, die äußeren Mischflügel relativ breit auszuführen oder aber auch mit nach innen reichenden Kämmen zu versehen, um das Mischgut in größeren Mengen aufzuwerfen. Da die äusseren Mischflügel hohl sind, können in diesen Heizelemente oder Wasserverteiler und -sammler vorgesehen sein, um über eine Hohlwelle einen Heizwasserkreislauf zu erzielen. Weiterhin hat sich herausgestellt, dass ein innerer Mischflügel selbst dann voll funktionsfähig ist, wenn dieser beispielsweise nur aus einem Kreisbogensegment besteht, das in sich leicht gedreht ist. Ein solcher innerer Mischflügel ist sowohl als einarmige Spirale als auch als doppelarmige Spirale verwendbar. Im Falle der Verwendung von Schlagmessern können mehrere solche Schlagmesser auch auf einer Welle befestigt sein, die zentrisch innerhalb des äußeren Mischflügels angeordnet und beidseitig gelagert ist. Auch durch die Schlagmesseranordnung ist eine Strömungsrichtung erzielbar. Auch können die Schlagmesser versetzt gleichläufig, jedoch unterschiedliche Strömungsrichtungen bewirkend, oder auch entgegengesetzt angetrieben auf verschiedenen Wellen, die ineinander gesteckt sind, angeordnet sein, um den Zerkleinerungs - und Mischeffekt zu beschleunigen. Die Erfindung ermöglicht dem Fachmann hier diverse Ausführungsmöglichkeiten der Optimierung.

Ein Mischer für eine Anlage nach der Erfindung lässt sich somit als Einzelmischer in herkömmlicher Weise benutzen. Er kann jedoch auch unter Verwendung einer Schlagmesseranordnung, die aus einem einzigen Messer oder mehreren aneinandergereihten Messern bestehen kann, die z.B. auf einer Welle über die gesamte Länge des Mischtroges verteilt sitzen, als Zerkleinerungsmischer zum Einsatz kommen. Darüber hinaus ist es möglich, durch entsprechende Abstimmung der Antriebe der äußeren Flügel und der inneren Flügel den Mischer auch als gesteuerten Durchlaufmischer in einer Großanlage verwenden zu können. Bei der Ausbildung als Durchlaufmischer ist es erforderlich, dass ein Teil der Flügelanordnung des Mischers in einem zylinderförmigen Teil vorhanden ist und eine besonders lange Förderflügelanordnung vorgesehen ist, um auch innerhalb dieses zylinderförmigen Teils eine Mischung zu bewirken, bevor die äußeren Flügel das gemischte und getrocknete oder teilgetrocknete Gut über die Auslauföffnung zum nächsten Mischer befördern. Selbstverständlich kann ein Durchlaufmischer auch derart eingerichtet sein, dass die Beschickung mit Mischgut bei normaler Ausführung automatisch erfolgt, sobald ein Mischvorgang oder ein Trocknungsprozess abgeschlossen ist, und der Mischer wieder entleert wird.

Soll der Mischer entleert werden, ist es lediglich erforderlich, den Antrieb der inneren Flügelanordnung bzw. Messeranordnung außer Betrieb zu setzen oder derart in die gleiche Richtung transportierend wirken zu lassen, also hinzuaddierend zu der Förderbewegung der äußeren Flügel zu steuern, dass eine schnellere Entleerung über die Entleerungsöffnung erfolgt. Darüber hinaus ist es möglich, während des Entleerungsprozesses die innere Anordnung der Flügel bzw. der Messer pulsweise schnell rotieren zu lassen, so dass anhaftendes. Mischgut nach außen geschleudert und dort von den Abstreifern der äußeren Mischflügel erfasst wird. In gleicher Weise kann auch zum Schluss eines Entleerungsprozesses die Drehzahl der äußeren Flügel erhöht werden, so dass auch daran anhaftendes Mischgut in optimaler Weise an die Außenkanten der äußeren Mischflügel gleitet. Dies hat den Vorteil, dass praktisch kein Mischgut sich mehr in dem Mischer nach dem Entleeren befindet. Eine optimale Selbstreinigung ist sichergestellt. Eine hygienische Reinigung ist darüber hinaus auf einfache Weise möglich, wenn über Schnellkupplungen die Flügelanordnungen von den Antriebswellen nach oben abgezogen werden können.

Die Enden der Mischflügel können zur Stabilisierung und zur Erhöhung der mechanischen Festigkeit bei paariger Anordnung oder bei gleichmäßiger Umfangverteilung mehrerer Flügel an ihren Enden miteinander verbunden sein. Besteht die Verbindung aus einem daran befestigten quer im Mischergehäuse verlaufenden, propellerartigen Ausräumflügel, so werden die gemischten und getrockneten Massen schneller aus dem Gehäuse ausgeräumt. Auch die Enden der Innenflügel können miteinander verbunden sein. Anstelle von einer der paarigen Flügelanordnungen können auch drei oder mehrere Flügel vorgesehen sein, die auch mit Heizsystemen ausgestattet sein können.

Durch die horizontale Anordnung des Mischtrogs und der Mischflügel wird beim Mischen das Mischgut von den äußeren Flügeln von einer Seite zur anderen Seite hin vorgeschoben und durch die inneren Mischflügel zurückgesogen und gleichzeitig auch umgewälzt. Bei diesem Vorgang fällt auch von den Mischflügeln nach oben transportiertes Mischgut in den Innenraum, so dass zusätzlich zu der Strömung eine stetige Beimischung auch noch an den Mischflügeln anhaftenden Gutes gegeben ist. Es hat sich gezeigt, dass auch eine optimale Mischung dann gegeben ist, wenn der Zuführraum oberhalb der Mischflügel offen ist. Das Mischgut wird dabei auch nicht nach außen geschleudert, wenn die überstehenden Gehäusewände oberhalb des Mischtroges nach oben verlängert ausgeführt sind. Dadurch ist es weiterhin möglich, Mischgut bis in eine Höhe einzufüllen, die höher ist als der Mischflügeldurchmesser der äußeren Mischflügel. Der Mischtrog kann in der Länge und/oder in der Höhe gewünschten Mischergrößen angepasst sein, ebenso die Mischflügel. So sind Mischergrößen von 100 l bis 1000 l auf einfache Weise nur durch Verlängerung oder Verbreiterung zu erreichen.

Durch die einstellbaren Motoren kann die Rotationsgeschwindigkeit der Mischflügel dem jeweiligen Mischgut, z.B. grobem oder feinem, angepasst werden. Dadurch, dass das Gehäuse gegenüber dem Untergestell in vertikaler Richtung verschiebbar ist, kann jede gewünschte Arbeitshöhe eingestellt werden. Dies ist beim manuellen Beschicken oder beim automatischen Beschicken aus einer anderen Maschine von Vorteil. Die Arbeitshöhe kann dabei soweit abgesenkt werden, so dass ein automatischer Einlauf auch aus relativ niedrigen Verarbeitungsmaschinen möglich ist bzw. das Mischgut von Hand eingegeben werden kann. In der angehobenen Stellung ist es möglich, auf einfache Weise einen Transportwagen unter die Seite des Mischers zu schieben, an welcher der Auslauf der Entleerungsöffnung vorgesehen ist. Durch entsprechende Drehrichtung der äußeren Flügel wird infolge der Wendelung das Mischgut durch die geöffnete Entleerungsöffnung ausgeschoben und fällt in eine Förderanlage mit Förderband und/oder Förderschnecke, in einen Transportwagen oder in einen Sack, Beutel, Karton oder ein anderes Behältnis, das verschließbar und/oder vakuumierbar und/oder verschweißbar ist.

Das Verschlusselement zum Verschließen der Entleerungsöffnung kann in einfacher Ausgestaltungsform eine verschwenkbare Klappe oder ein Schieber mit Gummidichtung sein, die um eine obere horizontale Schwenkachse verschwenkbar an der Außenseite einer Stirnwand befestigt ist. Die Entleerungsöffnung befindet sich in der Stirnseite. Zum Betätigen ist es zweckdienlich, einen Kniehebelmechanismus zu verwenden, der bekanntlich aus einem ersten Hebel besteht, der schwenkbeweglich an der Klappe zu befestigen und schwenkbeweglich mit einem Betätigungshebel verbunden ist, der um ein ortsfestes Drehlager im Gehäuse gelagert ist. Dieser Hebel ist über das Drehlager hinaus verlängert, um den Hebel betätigen zu können, der mit dem ersten schwenkbeweglich gelagerten verbunden ist. Diese Ausführungsform hat den Vorteil, dass bei entsprechender Dimensionierung der beiden gelenkig miteinander verbundenen Hebel in einer unteren Stellung eine Übertotpunktstellung eingenommen werden kann, d.h. dass das Gelenk unterhalb der Verbindungslinie zwischen den beiden Anlenkungen am Gehäuse einerseits und an der Klappe andererseits verbracht werden kann, so dass ein gesichertes, luftdichtes Verschließen der Klappe ohne weitere Hilfsmittel möglich ist.

Die vorzusehende Abstreiflippe an den äußeren Flügeln kann auf einfache Weise mittels eines Halters angeschraubt sein. Eine solche Abstreiflippe kann aber auch in eine röhrenförmige, an der äußeren Kante vorgesehene Aufnahme hineingeschoben werden. Die Lippe steht dabei aus einem Schlitz hervor und wird beispielsweise in der röhrenförmigen Öffnung gehalten. Dieses hat fertigungstechnische Vorteile und ist leicht zu realisieren. Weiterhin kann die Abstreiflippe ein hinteres Profil aufweisen, das dem Querschnitt der röhrenförmigen Aufnahme entspricht, so dass ein abgedichtetes Einsetzen ermöglicht wird, was insbesondere bei der Verwendung von organischen Massen den Vorteil hat, dass an den Mischerflügeln und der Dichtungslippe auch am Übergangsbereich sich keine Reste der organischen Massen absetzen können und diese durch einen Dampfstrahler einfach entfernt werden können.

Die Erfindung wird nachfolgend ergänzend anhand der in den Figuren dargestellten Ausführungsbeispiele erläutert.

In den Zeichnungen zeigen:
- FIG 1: in einer schematischen Blockdarstellung eine Anlage nach der Erfindung,
- FIG 2: einen Mischer mit im Teilschnitt gezeichnetem Mischtrog und angesetzten äußeren und inneren Mischflügeln mit schematisch dargestellten Antriebseinrichtungen;
- FIG 3: in schematischer Darstellung eine Variante der Mischflügelanordnung unter Verwendung eines Schlagmessers und
- FIG 4: eine Verschließvorrichtung für eine Klappe einer Entleerungsöffnung des Mischers.

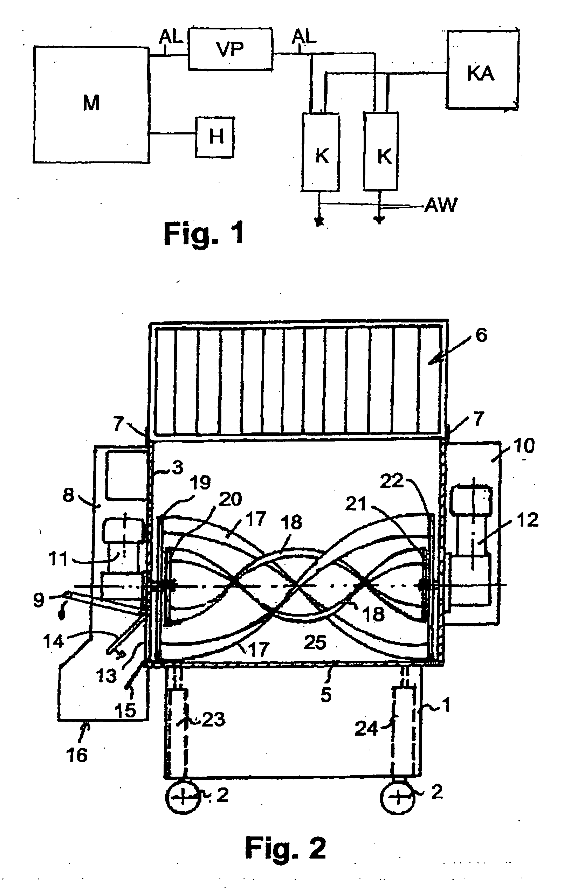

Fig. 1 gibt eine Anlage nach der Erfindung schematisch in Form eines Blockplanes an. Der Mischer M ist als Vakuummischer ausgebildet. Er ist beispielsweise oben beschickbar und wird, wie anhand der weiteren Figuren beschrieben, von einer Haube luftdicht abgeschlossen und ist mit einer Abluftleitung AL verbunden, die an eine Vakuumpumpe VP angeschlossen ist. Des Weiteren ist eine Heizvorrichtung H vorgesehen, mit der das eingebrachte Mischgut aufgeheizt wird, beispielsweise auf ca. 80° C. Mit der Vakuumpumpe VP wird im Mischergehäuse ein Vakuum beispielsweise zwischen 100 und 2 mbar erzeugt. Die abgesogene Luft wird über die Abluftleitung AL den beiden Kondensatoren K zugeführt, in denen der enthaltene Dampf zu Abwasser AW kondensiert. Dieses Abwasser AW kann dann einem Kanalanschluss direkt oder in einem Kondensatbehälter gesammelt und dann mit Hilfe von Ventiltechnik gesteuert einem Abwasserkanal zugeführt werden. Bei den Kondensatoren handelt es sich um handelsübliche Kondensatoren, die an eine Kühlanlage KA angeschlossen sind, über die Kühlflüssigkeit erzeugt wird, die das Kondensationsrohr im Kondensator K umspült und kühlt.

Ein besonders geeigneter Mischer ist in Fig. 2 dargestellt. Dieser weist ein Untergestell 1 auf, das mittels Rädern 22 auf dem Boden verschiebbar ist. Hieran kann auch eine Trägerplatte für die anderen Aggregate montiert sein. Gegenüber dem Untergestell 1 ist ein aufgesetztes Gehäuse des Mischers in vertikaler Richtung höhenverstellbar angeordnet. Dadurch ist es möglich, das Mischergehäuse in verschiedene Arbeitshöhen gegenüber dem Boden bzw. in verschiedene Höhenpositionen gegenüber dem Untergestell 1 zu verbringen. Bewerkstelligt wird dies durch Hebevorrichtungen 23, 24, die im Untergestell angeordnet sind. Dies können beispielsweise hydraulische Zylinder oder Scherenhebewerke oder andere Hebevorrichtungen, motorisch oder manuell angetrieben, sein. In der Darstellung ist aus Vereinfachungsgründen auf die Einzeichnung der Heizkanäle und der Zuleitung für das Heizmedium verzichtet worden. Ebenso sind keine Absaugstutzen eingezeichnet, die über die Abluftleitung mit der Vakuumpumpe, die ihrerseits mit den Kondensatoren verbunden ist, verbunden sind.

Tragendes Element des Mischers ist der Mischertrog 25, der Bestandteil des Gehäuses ist und im unteren Bereich eine halbkreisförmige Bodenwanne 5 und gradförmig oder leicht konisch sich öffnend nach oben verlaufend Wände aufweist. Dadurch ist es möglich, über den Durchmesser der Mischflügel 17, 17' hinaus Mischgut einzufüllen. Der Mischtrog wird vorn von einer Stirnwand 3 und hinten von einer Stirnwand 4 abgeschlossen und ist z.B. aus Edelstahl hergestellt. In dem Mischtrog sind die äußeren rund gewendelten Mischflügel 17, 17' eingebracht, die drehbar an den Stirnseiten 3 und 4 gelagert sind, und zwar derart, dass die Mischflügel in einem geringen Abstand oberhalb des halbschalenförmigen Unterteils 5 oder anliegend entlanggeführt werden, so dass beispielsweise angesetzte Abstreifer an der Bodenwand entlang gleiten können. Die Mischflügel 17, 17' sind beidseitig an Verbindungsgestängen 19 bzw. je einem Flansch 19, 22 befestigt, der zentrisch gelagert ist. Mit dem Flansch 19 ist zentrisch eine welle, z.B. eine Hohlwelle, verbunden, die von einem regelbaren Elektromotor 11 angetrieben wird, z.B. über ein Getriebe, oder direkt hiermit gekoppelt ist. Über die Hohlwelle kann von einer Seite über einen Verteiler in die hohlen Flügel Heizungswasser eingelassen und an der anderen Seite abgelassen werden. Der Motor versetzt die in den Lagerungen in den Stirnseiten 3 und 4 gelagerten äußeren Flügel 17, 17' in eine Drehbewegung. Die Flügel sind wendelförmig ausgebildet, wobei die Steigung der Wendel, die Länge und die Gesamtlänge der Flügel sich nach dem Fassungsvermögen des Mischtroges richten. Durch die Art der Windungsführung der sich drehenden wendelförmigen Flügel wird z.B. bei Rechtsdrehung das eingefüllte Mischgut von links nach rechts im Mischtrog 25 transportiert; bei umgekehrtem Drehsinn entgegensetzt. Die Flügel werfen dabei das Mischgut auf, so dass auch nach oben mitgenommenes Mischgut, z.B. Fleischbrocken, in das Innere der äußeren Mischflügel 17, 17' fallen kann. In der äußeren Mischflügelanordnung 17, 17', die in diesem Fall aus zwei Flügeln besteht, ist eine weitere innere Flügelanordnung vorgesehen, die im Ausführungsbeispiel gemäß Fig. 2 ebenfalls aus durchgehenden wendelförmigen Mischflügeln 18 besteht, die jeweils zweimal in sich gedreht sind, aus Flachmaterial bestehen und eine Schrägstellung aufweisen. Die mittigen Mischflügel 18 und 18' sind an ihren Enden ebenfalls über Halter bzw. einen Ringflansch 21 miteinander verbunden bzw. hieran befestigt. Diese Haltestege oder Ringflansche 20, 21 sind zentrisch drehbar gelagert und können Heizungswasserverteiler oder -sammler beinhalten, wobei die rechten Flügelenden mit dem Ringflansch 20 drehbar an dem Halter 19 bzw. dem dort vorgesehenen Ringflansch für die äußeren Flügel gelagert oder auf der Welle drehbar gelagert sind, die die äußeren Mischflügel antreibt, während die Mischflügel auf der linken Seite mit dem Trägerflansch 21 an einer durch die Trägeranordnung bzw. den Ringflansch 22 hindurch gesteckten Welle befestigt sind, die die Drehbewegung auf die inneren Mischflügel überträgt. Die Welle ist Bestandteil des Antriebsmotors 12, der seitlich angebracht ist. Auch dieser Motor sollte zweckmäßigerweise ein regelbarer Motor sein. Der Regelmotor 12 ist in einem Gehäuse 10 untergebracht, das seitlich an der Stirnwand 4 befestigt ist.

Je nach Mischgut empfiehlt es sich, die Drehzahlen der äußeren Mischflügel zwischen ca. 5 bis 40 U/min und die der inneren Flügel zwischen ca. 10 bis 80 U/min einzustellen. Die inneren Mischflügel 18 und 18' sollten schneller rotieren als die äußeren Mischflügel und zwar in entgegengesetzter Richtung hierzu, so dass das Mischgut, wenn es von links nach rechts durch die äußeren Mischflügel transportiert wird, durch die inneren von rechts nach links transportiert wird oder bei umgekehrter Umdrehung in entgegengesetzter Richtung. Dadurch sind eine Längsströmung und Rückströmung des Mischgutes bei gleichzeitiger Feuchtigkeitsabgabe gewährleistet. Soll nun ein gemischtes, getrocknetes Gut aus der Mischtrommel entleert werden, so ist es lediglich erforderlich, die inneren Mischflügel nicht mehr entgegengesetzt rotieren zu lassen, sondern beide Mischflügel in die gleiche Drehrichtung zu versetzen, so dass das Mischgut langsam aus der Entleerungsöffnung 13 austritt. Die Entleerungsöffnung 13 ist von der Klappe 14 verschlossen, die an einem Lager an der Stirnwand 3 innerhalb des Abdeckungsgehäuses 8 verschwenkbar angeordnet und über einen Hebel 9 betätigbar ist. Der Hebel 9 wird zum Verschließen in die in Pfeilrichtung eingezeichnete Richtung nach unten gedrückt, wodurch die Öffnung 13 verschlossen wird. Zum Öffnen wird der Hebel 9 nach oben bewegt, so dass die dargestellte Schwenkstellung eingenommen wird und das Mischgut durch Linksdrehung der äußeren Mischflügel 17 und 17' heraustransportiert wird. Ein Ableitblech 15 sorgt dafür, dass durch den Öffnungsschacht 16 des Gehäuses 8 das Mischgut ausfallen kann. Es ist ersichtlich, dass in der dargestellten Ausführung praktisch nur ein flacher Behälter oder eine Schüssel unter den Auslauf 16 geschoben werden kann. Wird nun der Mischtrog 25 durch die Hebevorrichtungen 23 und 24 angehoben, so kann auch ein größerer Transportwagen, wie er in Fleischereien und Großküchen üblich ist, untergefahren werden, um den gesamten Inhalt des Mischtroges 25 aufnehmen zu können. Nach dem Entleeren kann das Gehäuse wieder heruntergefahren werden, um eine leichtere Beschickung in die obige Öffnung sicherzustellen.

Das Gehäuse weist oben Schwenklager 7 auf, die zum schwenkbeweglichen Halt einer Vakuumhaube 6 dienen. Diese Vakuumhaube 6 kann beispielsweise eine Vakuumanzeige aufweisen, ebenso den Anschlussstutzen für die Abluftleitung. Es kann auch ein Sichtfenster vorgesehen sein, um einen Einblick während des Misch- und Trocknungsprozesses in die Mischtrommel zu ermöglichen. Auch kann ein Schutzgitter zwischengefügt sein, durch das das Mischgut eingefüllt werden kann. Dies kann auch mitaufklappbar ausgeführt sein. Zum Beschicken kann die Vakuumhaube 6 aufgeklappt und das Material eingegeben werden. Die Vakuumhaube 6 bietet darüber hinaus die Möglichkeit, dass mit dem Schließen oder Öffnen elektrische Schalteinrichtungen gesteuert werden können, die die Motoren erst anlaufen lassen, wenn sich die Vakuumhaube 6 in der Schließstellung befindet, so dass ein Zugriff in die rotierenden Mischflügel nicht möglich ist. Auch kann mit der Steuereinrichtung die Ansteuerung der Vakuumpumpe und der Heizeinrichtung und ggf. auch des Kühlaggregates gekoppelt sein. In der Vakuumhaube kann darüber hinaus auch als zusätzliche oder alleinige Heizvorrichtung ein Mikrowellengenerator angeordnet sein. Dieser kann auch in den Seitenwänden integriert angeordnet sein. Es hat sich gezeigt, dass dann, wenn der Mikrowellengenerator Mikrowellen im Bereich von 2,5 GHz generiert, eine schnelle Erwärmung des Mischgutes, vor allen Dingen auch eine innere Erwärmung optimal möglich ist, selbst dann, wenn die Mischflügel oder Wellen aus Metall bestehen.

Anstelle oder auch ergänzend zu solchen Heizvorrichtungen kann auch eine Infrarotstrahlungsquelle zum Einsatz kommen, die in der Vakuumhaube 6 integriert oder an einer anderen Stelle des Gehäuses positioniert sein kann. Als besonders vorteilhaft hat es sich erwiesen, Infrarotlichtwellen im Bereiche von 2 bis 6 µm zu generieren, um eine gute Wärmeeinleitung in das Mischgut zu erreichen.

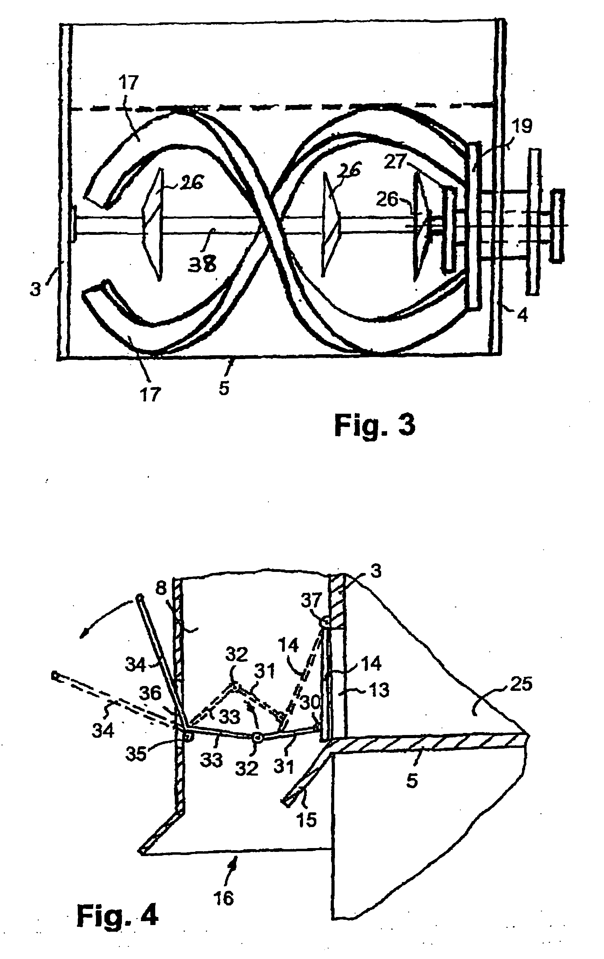

In Fig. 3 ist schematisch eine Variante dargestellt, bei der ein Motor oder eine Motorenkopplung einseitig an dem Gehäuse vorgesehen ist. Die anderen Teile des Gehäuses und das Untergestell sind dabei nicht dargestellt. Die äußeren Flügel 17 und 17' wirken in gleicher Weise wie die gemäß Fig. 2. Der innere Flügel besteht in diesem Fall aus einem Schlagmesser, das wesentlich schneller rotiert, aber dennoch das Material in gleicher Weise anzusaugen vermag, wie die inneren Mischflügel 18, 18' gemäß Fig. 2, allerdings mit reduzierter Wirkung, was die Ansaugung der Massen am äußeren Ende der Flügel 17, 17' anbetrifft, die im ausgeführten Beispiel nicht miteinander verbunden sind, was bei kurzer Ausbildung des Mischtroges auch nicht erforderlich ist und insbesondere auch dann nicht, wenn, wie gestrichelt eingezeichnet, die Flügel in einem Gehäuse mit Zylinderform drehbar gelagert sind, das z.B. eine Öffnung zum Beschicken aufweist. Zum Entleeren wird auch bei dieser Ausführung der Antrieb des Schlagmessers 26 abgestellt, während die Drehung der äußeren Flügel 17, 17' beibehalten und ggf. reduziert wird, so dass das Mischgut aus der ebenfalls vorgesehenen Auslauföffnung 13 auslaufen kann. Zum schnellen Wechseln des Schlagmessers 26 kann darüber hinaus auch ein Wechselhalter 27 vorgesehen sein, so dass auch andere Messeranordnungen oder Flügelanordnungen im Bedarfsfall aufsteckbar sind. Des gleichen kann eine solche Wechseleinrichtung dazu dienen, um einen schnellen Wechsel der Flügelanordnungen vornehmen zu können. Die ineinandergesetzten mittigen Lagerungen für den Drehantrieb der äußeren Flügel 17 und 17' sowie des Schlagmessers 26 sind ebenfalls schematisch dargestellt. Das Ausführungsbeispiel in Figur 3 zeigt ferner, dass die Welle 38 für das Schlagmesser 26 durchgehend angeordnet sein kann. Auf der Welle sind verschiedene Schlagmesser 26 angeordnet. Das linke Schlagmesser ist entgegengesetzt gerichtet eingezeichnet, was symbolisieren soll, dass die Messer nicht nur in einer Strömungsrichtung wirkend angeordnet sein können, sondern auch entgegengesetzt, um beispielsweise bei gleichzeitiger Zerkleinerung auch eine Wirbel-Strömung zu erzielen.

In Fig. 4 ist im Teilschnitt auszugsweise der Bereich des Mischers gemäß Fig. 2 dargestellt, in welchem die Entleerungsöffnung 13 in der Stirnwand 3 des Mischtroges 25 vorgesehen ist. Aus der Abbildung ist weiterhin ersichtlich, dass das Ableitblech 15 in Verlängerung zum Boden 5 des Mischtroges 25 vorgesehen ist. Vor der Entleerungsöffnung 13 ist die Klappe 14 in Verschließstellung eingezeichnet. Diese Klappe ist um ein oberes Schwenklager 37, das horizontal verläuft, verschwenkbar gelagert und kann nach links verschwenkt werden. Abweichend zum Ausführungsbeispiel gemäß Fig. 2 wird die Klappe 14 über einen Kniehebelverschluss betätigt. Dieser Kniehebelverschluss besteht aus einem ersten Hebel 31, der verschwenkbar über ein Schwenklager 30 an der Klappe 14 befestigt und mit seinem anderen Ende drehbeweglich über ein Lager 32 an einen Hebelarm 33 angelenkt ist, der Bestandteil einer abgewinkelten Betätigungsstange 34 ist, die um ein Schwenklager 35 im Winkelbereich an der Innenseite der Außenwand des Vorsatzgehäuses 8 angelenkt ist. Die Betätigungsstange bzw. der Betätigungsbügel, falls dieser bügelförmig ausgebildet ist und zwei Stangen aufweist, greift durch Lagerungsschlitze 36 in der äußeren Wand hindurch. Die Längen des Hebels 31 und des Hebelarms 33 sind so aufeinander abgestimmt, dass sie in der dargestellten Position mit ihrem Verbindungslager 32 unterhalb der Verbindungslinie zwischen den Schwenkachsen 30 und 35 bzw. auf gleicher Verbindungslinie liegen, so dass durch die gestreckte oder die dargestellte stumpfwinklige Anordnung eine automatische Verschließsicherung der Klappe 14 gegeben ist. Soll die Klappe 14 zum Öffnen der Entleerungsöffnung 13 nach links in die dargestellte Position 14' verschwenkt werden, so ist es erforderlich, dass auf den Betätigungshebel 34 bzw. den Bügel 34 eine Kraft in Richtung des eingezeichneten Pfeils ausgeübt wird, wodurch der Hebel die mit 34' gekennzeichnete Position einnimmt. Der fest abgewinkelte Hebelarm 33 bewegt sich dabei in die Position 33' und zieht über das Lager 32' den Hebelarm 31 mit, so dass automatisch auch die Klappe 14 die Stellung 14' einnimmt. In dieser Stellung kann durch entsprechende Steuerung der nicht dargestellten äußeren Mischflügel der Mischer entleert werden. Das Mischgut wird dabei aus dem Mischtrog 25 durch die Öffnung 13 herausgeschoben und fällt über das Abgleitblech 15 und die Öffnung 16 des Gehäuses 8 in einen darunter fahrbaren Gut- bzw. Transportwagen. Anstelle der hier dargestellten Klappe 14 kann selbstverständlich auch ein Schieber zum Verschließen der Öffnung 13 vorgesehen sein, der dann über eine entsprechende Mechanik zu bedienen ist. Des Weiteren kann auch ein Schwenkschieber, der über einen Drehmechanismus bewegt wird, vorgesehen sein, der die Öffnung 13, beispielsweise bei runder Ausführung, freigibt. Darüber hinaus kann anstelle des angegebenen fahrbaren.Transport - oder Gutwagens auch ein Auffangbehälter einer Abfüllanlage oder Abpackanlage in Position unter die Entleerungsöffnung gebracht werden. Auch ist es möglich, das Entleerungsgut unmittelbar in luftdicht verschließbare Säcke direkt abzufüllen, die dann beispielsweise vakuumiert verschweißt werden. Auch hier werden dem Fachmann verschiedene Möglichkeiten eröffnet, die getrockneten Massen zu verpacken und/oder weiter zu transportieren und zu verarbeiten.

Eine Anlage nach der Erfindung kann elektronisch vollautomatisch gesteuert derart ausgelegt sein, dass der Heizungsprozess, die Vakuumpumpe und der Kondensatablass einerseits geregelt und andererseits auch so gesteuert werden, dass beispielsweise bei Öffnen der Vakuumhaube die Prozesse unterbrochen und dann wieder nach dem Schließen fortgeführt oder beim Entleerungsprozess die Verarbeitungsprozesse beendet werden.

## Patentansprüche

1. Anlage zum Trocken von organischen Massen, insbesondere Küchen- und Speiseabfälle oder andere Biomassen, auch solche, die Verpackungsreste, Servietten, Strohhalme oder dgl. enthalten, aufweisend einen Mischer (M) mit mindestens einem äußeren (17, 17') und mindestens einem inneren Mischflügel (18, 18'; 26) in einem Gehäuse, die auf einer gemeinsamen Achse an mindestens einer Stirnwand (3, 4) gelagert und gesondert oder gekoppelt antreibbar sind, wobei der äußere Mischflügel (17, 17') das Mischgut in eine bestimmte Längsrichtung des Gehäuses fördert und der innere Mischflügel (18, 18'; 26) das Mischgut in gleicher oder entgegengesetzter Längsrichtung wie der äußere Mischflügel (17, 17') fördert, und mit einer verschließbaren Füllöffnung zum Eingeben der organischen Massen und einer untenseitigen oder seitlich untenseitigen verschließbaren Entleerungsöffnung (13) für die getrocknete Masse, wobei der Mischer (M) ein längliches Gehäuse aufweist, das bei horizontaler Anordnung seiner Längsachse in seinem unteren Bereich als kreissegmentförmige Wanne ausgebildet ist und an seinen beiden Enden je die Stirnwand (3, 4) und sich nach oben erstreckende Seitenwände aufweist, die obenseitig die Füllöffnung begrenzen, die von einem Deckel oder einer Haube (6) luftdicht abschließbar ist,
**gekennzeichnet durch**
- eine Ausbildung des Mischers als Vakuummischer (M) mit
- einer mit mindestens einem oberhalb der maximalen Füllhöhe im Gehäuse des Mischers (M) angebrachten Absaugstutzen verbundenen Vakuumpumpe (VP) zum Absaugen der Luft in dem Mischer zur Erzeugung des Vakuums,
- einer Heizvorrichtung (H) zur Erwärmung der organischen Massen,
- mindestens einem an die Abluftleitung (AL) der Vakuumpumpe (VP) angeschlossenen Kondensator (K) mit einem angeschlossenen Kühlaggregat (KA) zum Kondensieren der abgesogenen Luft und
- einer Ableitung (AW) für das **durch** Kühlung im Kondensator (K) aus der Abluft gewonnene Kondensat,
wobei der äussere Mischflügel (17, 17') mindestens teilsweise hohl ausgebildet sind und dass in den Hohlraum die Heizvorrichtung eingesetzt ist oder in den Hohlraum über einen seitlichen Verteiler mit zentrischem Rohranschluss ein Wärmemedium einleitbar und ableitbar ist, wobei die Enden der äußeren Mischflügel (17, 17') miteinander über einen Querteil oder eine Ringscheibe (22) verbunden sind, an dem oder der zentrisch Lagerzapfen oder Lager für die Lagerung in den Stirnseiten (3, 4) vorgesehen sind, wobei das Querteil oder die Ringscheibe hohl ausgebildet und über einen zentralen Anschluss an einer Warmwasserzu- oder Warmwasserableitung mit der Heizvorrichtung verbunden ist.

2. Anlage nach Anspruch 1, **dadurch gekennzeichnet, dass** die Heizvorrichtung eine Mikrowellen-Heizvorrichtung ist.

3. Anlage nach Anspruch 1 oder 2, **dadurch gekennzeichnet, dass** die Heizvorrichtung eine Infrarotstrahlung abgebende Heizquelle enthält.

4. Anlage nach wenigstens einem der Ansprüche 1 bis 3, **dadurch gekennzeichnet, dass** der mindestens eine äussere Mischflügel (17) einarmig, doppelarmig oder mehrarmig und wendelförmig mit Teilwendel oder ganzen oder mehreren Wendelgängen ausgebildet ist und sich mindestens an dem Boden des kreissegmentförmigen Mischtroges (25) abstreifend entlang dreht.

5. Anlage nach wenigstens einem der Ansprüche 1 bis 4, **dadurch gekennzeichnet, dass** der innere Mischflügel (18) ein ein-, doppel- oder mehrarmiger, wendel- oder schneckenförmig ausgebildeter Mischflügel ist.

6. Anlage nach Anspruch 4 oder 5, **dadurch gekennzeichnet, dass** die Wendel eine Teilwendelung, eine volle oder eine mehrgängige wendelung ist.

7. Anlage nach wenigstens einem der Ansprüche 1 bis 6, **dadurch gekennzeichnet, dass** der innere Mischflügel (18) durch mehrere rotierende Schlagmesser (26) ersetzt ist, wobei die Schlagmesser (26) auf einer Welle (38) befestigt sind.

8. Anlage nach wenigstens einem der Ansprüche 1 bis 7, **dadurch gekennzeichnet, dass** der innere Mischflügel oder die Schlagmesser im Lagerungsbereich vor dem Flansch (27) im Innenraum des Mischtroges (25) einseitig oder beidseitig vorgesehen ist/sind und nur über einen Teilabschnitt innerhalb des äußeren Mischflügels (17, 17') verläuft/verlaufen.

9. Anlage nach wenigstens einem der Ansprüche 1 bis 8, **dadurch gekennzeichnet, dass** zentrisch ein innerer Mischflügel (18, 18') im Wesentlichen über die gesamte Länge sich erstreckend vorgesehen ist und dass die Mischflügelenden an einem sich drehenden Flansch befestigt sind, auf welchen Mischflügel (18, 18') mindestens einseitig ein Antrieb (12) wirkt, oder dass der innere Mischflügel aus auf einer Welle (38) befestigten Schlagmessern (26) besteht, die derart angeordnet sind, dass bei gleichzeitigem Zerwirken der eingefüllten Massen diese in eine bestimmte Richtung oder abschnittsweise gegenläufig transportiert werden.

10. Anlage nach wenigstens einem der Ansprüche 1 bis 9, **dadurch gekennzeichnet, dass** die Mischerflügelanordnungen in einem Halbschalenmischtrog angeordnet sind, und dass die zweite aufgesetzte Schalenhälfte durch einen Deckel gebildet ist.

11. Anlage nach einem der Ansprüche 1 bis 10, **dadurch gekennzeichnet, dass** an dem Mischer (M) ein Schalter zum Abschalten der Vakuumpumpe und ein Ventil zum Lufteinlass vorgesehen sind und dass eine Steuervorrichtung vorgesehen ist, die die Betätigung des Ventils nur gestattet, wenn die Vakuumpumpe abgeschaltet ist, wobei eine Verriegelungsschaltung vorgesehen ist, die die Steuerung der Vakuumpumpe (VP), Kondensatablass (AL), Heizvorrichtung (H) regelt oder sperrt, solange die Entleerungsöffnung (13) geöffnet ist und wobei die Vakuumpumpe (VP) und das Kühlaggregat (KA) für den oder die Kondensatoren parallel ein- oder ausschaltbar sind.

## Claims

1. An installation for drying organic matter, in particular kitchen and food waste or other biomass, also that which contains remnants of packaging, serviettes, straws or the like, having a mixer (M) with at least one outer (17, 17') and at least one inner (18, 18'; 26) mixing blade in a housing, which are mounted on a common axis on at least one end wall (3, 4) and can be driven separately or in coupled manner, the outer mixing blade (17, 17') conveying the material being mixed in a given longitudinal direction of the housing, and the inner mixing blade (18, 18'; 26) conveying the material being mixed in the same or the opposite longitudinal direction as/to the outer mixing blade (17, 17'), and with a closable filling opening for introducing the organic matter and a lower-side or laterally lower-side closable emptying opening (13) for the dried matter, the mixer (M) having an elongate housing which, when its longitudinal axis is arranged horizontally, is formed in its lower region as a trough in the shape of a segment of a circle and has at both its ends in each case the end wall (3, 4) and upward-extending side walls which on the upper side define the filling opening, which can be closed off airtight by a cover or a hood (6),
**characterised by**
- a configuration of the mixer as a vacuum mixer (M) with
- a vacuum pump (VP) which is connected to at least one extraction connector provided above the maximum filling level in the housing of the mixer (M) in order to extract the air in the mixer to produce the vacuum,
- a heating device (H) for heating the organic matter,
- at least one condenser (K) which is connected to the exhaust-air line (AL) of the vacuum pump (VP), with an attached cooling unit (KA) for condensing the extracted air, and
- a discharge line (AW) for the condensate which is obtained from the exhaust air by cooling in the condenser (K),
the outer mixing blade (17, 17') being made at least partially hollow, and that the heating device is inserted into the cavity or a thermal medium can be introduced into and removed from the cavity via a lateral distributor with a central pipe connection, the ends of the outer mixing blades (17, 17') being connected together via a transverse part or an annular disc (22), on which bearing journals or bearings are provided centrally for mounting in the end faces (3, 4), the transverse part or the annular disc being made hollow and being connected to the heating device via a central connection to a hot-water feed line or hot-water discharge line.

2. An installation according to Claim 1, **characterised in that** the heating device is a microwave heating device.

3. An installation according to Claim 1 or 2, **characterised in that** the heating device contains a heat source which gives off infrared radiation.

4. An installation according to at least one of Claims 1 to 3, **characterised in that** the at least one outer mixing blade (17) is formed with one arm, two arms or multiple arms and in the shape of a helix with a partial turn or a whole turn or a plurality of helix turns, and rotates scraping at least along the base of the mixing trough (25) which is in the shape of a segment of a circle.

5. An installation according to at least one of Claims 1 to 4, **characterised in that** the inner mixing blade (18) is a one-armed, two-armed or multiple-armed, helical or screw-shaped mixing blade.

6. An installation according to Claim 4 or 5, **characterised in that** the helix is a partial turn, a complete turn or a multi-thread turn.

7. An installation according to at least one of Claims 1 to 6, **characterised in that** the inner mixing blade (18) is replaced by a plurality of rotating fly cutters (26), the fly cutters (26) being fastened to a shaft (38).

8. An installation according to at least one of Claims 1 to 7, **characterised in that** the inner mixing blade or the fly cutters is/are provided on one side or on both sides in the bearing region in front of the flange (27) in the interior of the mixing trough (25) and run(s) only over a partial section within the outer mixing blade (17, 17').

9. An installation according to at least one of Claims 1 to 8, **characterised in that** centrally an inner mixing blade (18, 18') is provided extending substantially over the entire length, and **in that** the ends of the mixing blade are fastened to a rotating flange, on which mixing blade (18, 18') a drive (12) acts at least on one side, or **in that** the inner mixing blade consists of fly cutters (26) fastened to a shaft (38) which are arranged such that upon simultaneous cutting-up of the poured-in matter the latter is transported in a given direction or in sections in the opposite directions.

10. An installation according to at least one of Claims 1 to 9, **characterised in that** the mixing-blade arrangements are arranged in a half-shell mixing trough, and **in that** the second shell half which is placed on top is formed by a cover.

11. An installation according to one of Claims 1 to 10, **characterised in that** a switch for switching off the vacuum pump and a valve for letting in air are provided on the mixer (M), and **in that** a control device is provided which permits actuation of the valve only when the vacuum pump is switched off, an interlocking circuit being provided which controls or blocks the control of the vacuum pump (VP), condensate outlet (AL), heating device (H) as long as the emptying opening (13) is opened, and the vacuum pump (VP) and the cooling unit (KA) for the condenser(s) being able to be switched on or off in parallel.

## Revendications

1. Installation de séchage de masses organiques, en particulier de déchets de cuisine et d'aliments ou d'autres biomasses, également celles contenant des restes d'emballages, des serviettes, des pailles ou autres, présentant un mélangeur (M) avec au moins une pale de mélange extérieure (17, 17') et au moins une pale de mélange intérieure (18, 18'; 26) dans un boîtier, qui sont montées sur un axe commun sur au moins une paroi frontale (3, 4) et peuvent être entraînées de manière séparée ou couplée, la pale de mélange extérieure (17, 17') transportant la matière à mélanger dans une direction longitudinale déterminée du boîtier et la pale de mélange intérieure (18, 18'; 26) transportant la matière à mélanger dans une direction longitudinale identique ou opposée à celle de la pale de mélange extérieure (17, 17'), et avec une ouverture de remplissage obturable pour l'introduction des masses organiques et une ouverture de vidage (13) du côté inférieur ou latéralement du côté inférieur pour la masse séchée, le mélangeur (M) présentant un boîtier allongé qui, en cas de disposition horizontale de son axe longitudinal, est réalisé, dans sa zone inférieure, sous forme de cuve en segment de cercle et présente, à ses deux extrémités, chaque fois la paroi frontale (3, 4) et des parois latérales s'étendant vers le haut qui, du côté supérieur, délimitent l'ouverture de remplissage qui peut être obturée de manière étanche à l'air par un couvercle ou un capot (6),
**caractérisée par**
- une réalisation du mélangeur sous forme de mélangeur sous vide (M) avec
- une pompe à vide (VP), connectée au moins à une tubulure d'aspiration placée au-dessus de la hauteur de remplissage maximale dans le boîtier du mélangeur (M), pour l'aspiration de l'air dans le mélangeur pour générer le vide,
- un dispositif de chauffage (H) destiné à chauffer les masses organiques,
- au moins un condensateur (K) raccordé au conduit d'évacuation d'air (AL) de la pompe à vide (VP) avec un ensemble de refroidissement (KA) y raccordé pour condenser l'air aspiré, et
- un conduit d'évacuation (AW) du condensat obtenu par le refroidissement dans le condensateur (K) de l'air évacué,
dans laquelle la pale de mélange extérieure (17, 17') est réalisée au moins partiellement creuse et dans l'espace creux est placé le dispositif de chauffage ou dans l'espace creux peut être introduit et évacué par l'intermédiaire d'un distributeur latéral à connexion de tube centrale un fluide chauffant, les extrémités des pales de mélange extérieures (17, 17') étant reliées l'une à l'autre par l'intermédiaire d'une pièce transversale ou d'un disque annulaire (22) sur laquelle ou sur lequel sont prévus centralement des tourillons ou des paliers pour le montage dans les parois frontales (3, 4), la pièce transversale ou le disque annulaire étant réalisé creux et étant relié, par l'intermédiaire d'une connexion centrale à un conduit d'alimentation ou d'évacuation d'eau chaude, au dispositif de chauffage.

2. Installation selon la revendication 1, **caractérisée par le fait que** le dispositif de chauffage est un dispositif de chauffage à micro-ondes.

3. Installation selon la revendication 1 ou 2, **caractérisée par le fait que** le dispositif chauffant contient une source de chaleur émettant des rayons infrarouges.

4. Installation selon au moins l'une des revendications 1 à 3, **caractérisée par le fait que** l'au moins une pale de mélange extérieure (17) est réalisée à un seul bras, à deux bras ou plusieurs bras et en forme de spirale avec des spirales partielles ou des spirales complètes ou plusieurs spirales et tourne au moins en raclant le fond de la cuve de mélange en forme de segment de cercle (25).

5. Installation selon au moins l'une des revendications 1 à 4, **caractérisée par le fait que** la pale de mélange intérieure (18) est une pale de mélange réalisée à un bras, à deux bras ou plusieurs bras, en forme de spirale ou de vis sans fin.

6. Installation selon la revendication 4 ou 5, **caractérisée par le fait que** la spirale est une spirale partielle, une spirale complète ou une spirale à plusieurs pas.

7. Installation selon au moins l'une des revendications 1 à 6, **caractérisée par le fait que** la pale de mélange intérieure (18) est remplacée par plusieurs lames frappantes rotatives (26), les lames frappantes (26) étant fixées à un arbre (38).

8. Installation selon au moins l'une des revendications 1 à 7, **caractérisée par le fait que** la pale de mélange intérieure ou les lames frappantes dans la zone de montage est/sont prévues d'un côté ou des deux côtés avant la bride (27) dans l'espace intérieur de la cuve de mélange (25) et s'étend(ent) uniquement sur un segment partiel à l'intérieur de la pale de mélange extérieure (17, 17').

9. Installation selon au moins l'une des revendications 1 à 8, **caractérisée par le fait qu'**une pale de mélange (18, 18') intérieure est prévue centralement en s'étendant sensiblement sur toute la longueur et que les extrémités de pale de mélange sont fixées à une bride rotative, pale de mélange (18, 18') sur laquelle agit au moins d'un côté un entraînement (12), ou que la pale de mélange intérieure consiste en des lames frappantes (26) fixées à un arbre (38), qui sont disposées de sorte qu'en cas de découpe simultanée des masses remplies, ces dernières soient transportées dans une direction déterminée ou par segment en sens opposé.

10. Installation selon au moins l'une des revendications 1 à 9, **caractérisée par le fait que** les aménagements de pales de mélange sont disposés dans une cuve de mélange en forme de demi-coquille, et que la deuxième moitié de coquille placée est formée par un couvercle.

11. Installation selon l'une des revendications 1 à 10, **caractérisée par le fait que** sur le mélangeur (M) sont prévus un interrupteur destiné à arrêter la pompe à vide et une soupape destinée à l'entrée d'air et qu'il est prévu un dispositif de commande qui ne permet l'actionnement de la soupape que lorsque la pompe à vide est arrêtée, un circuit de verrouillage étant prévu qui règle ou verrouille la pompe à vide (VP), la sortie de condensat (AL), le dispositif chauffant (H) tant que l'ouverture de vidage (13) est ouverte, et la pompe à vide (VP) et l'ensemble de refroidissement (KA) pouvant être enclenchés ou déclenchés en parallèle pour le ou les condensateurs.
